# EUROPÄISCHE PATENTANMELDUNG

(11) **EP 4 398 454 A1**
(43) Veröffentlichungstag der Anmeldung: **10.07.2024**
(21) Anmeldenummer: 21955519.0
(22) Anmeldetag: 03.09.2021
(51) Int. Cl.: H02K 1/16, H02K 3/487, H02K 3/34

(54) **NUTKEIL FÜR STATORANORDNUNG UND STATORANORDNUNG**

(71) Anmelder: Schaeffler Technologies AG & Co. KG, 91074 Herzogenaurach (DE)
(72) Erfinder: LI, Mingzhe, Kunshan, Jiangsu 201804 (CN); SHU, Sen, Shanghai 201804 (CN); LI, Xiangyang, Shanghai 201800 (CN)
(86) Internationale Anmeldenummer: PCT/CN2021/116440
(87) Internationale Veröffentlichungsnummer: WO 2023/028985

(57) **Zusammenfassung**

Ein Nutkeil für eine Statoranordnung ist zum Einbau in eine Leiternut (2h) eines Eisenkerns (2) der Statoranordnung bereitgestellt. Der Nutkeil (1) umfasst in einer Breitenrichtung (W) einen Mittelabschnitt (1m) und Breitenrichtungsenden (1e). Das Breitenrichtungsende (1e) ist mit einer Nut (1c) ausgebildet, wobei die Nut (1c) an einer Seite in einer Höhenrichtung offen und an der anderen Seite in der Höhenrichtung konkav ist, und wobei sich die Nut (1c) entlang einer Längsrichtung (L) geradlinig erstreckt. In einem Zustand, in dem der Nutkeil (1) in die Leiternut (2h) eingebaut ist, dient der Mittelabschnitt (1m) zur Abstützung eines Leiterabschnitts (4) in der Leiternut (2h), und die Nut (1c) dient zur Aufnahme eines radialen Innenendes (32) eines blattförmigen Isolators in der Leiternut (2h). Auf diese Weise kann der Nutkeil leichtgängig in die Leiternut eingeführt und die Isolationsleistung zwischen Eisenkern und Leiterabschnitt verbessert werden. Eine Statoranordnung, die den Nutkeil umfasst, ist ebenfalls bereitgestellt.

## Beschreibung

Die vorliegende Erfindung bezieht sich auf das Gebiet der Motoren und insbesondere auf einen Nutkeil für eine Statoranordnung für einen Motor und eine Statoranordnung mit dem Nutkeil.

In bestehenden Statoranordnungen für Motoren werden Nutkeile verwendet, um die radiale Öffnung einer Leiternut eines Eisenkerns der Statoranordnung zu verschließen. Nachdem der Leiterabschnitt (z. B. Wellenwicklung) in die Leiternut eingefügt wurde, wird der Nutkeil an der radialen Öffnung der Leiternut installiert, um ein Herausfallen des Leiterabschnitts durch die radiale Öffnung aus der Leiternut zu verhindern, und der Nutkeil kann auch die Isolationsleistung zwischen dem Eisenkern und dem Leiterabschnitt verbessern.

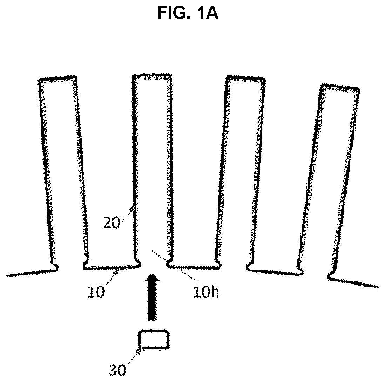

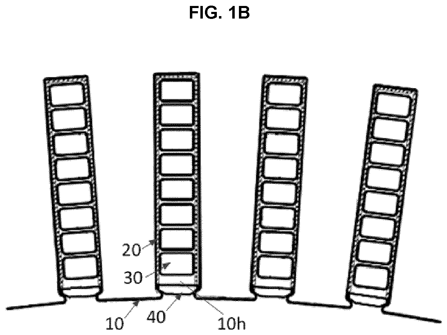

Insbesondere ist der Eisenkern 10 der Statoranordnung, wie in Fig. 1A gezeigt, mit einer Vielzahl von Leiternuten 10h ausgebildet, die zur radialen Innenseite hin offen ist. In jede Leiternut 10h wird zunächst das Isolierpapier 20 in einer Weise eingebaut, dass es an der Umfangswand jeder Leiternut 10h haftet, und dann wird der Leiterabschnitt 30 (z. B. eine Wellenwicklung) von der radialen Innenseite her durch die radiale Öffnung der Leiternut 10h in die Leiternut 10h eingefügt (dargestellt durch den Pfeil in Fig. 1A). Beim Einführen des Leiterabschnitts 30 kann das Isolierpapier 20 verhindern, dass der Leiterabschnitt 30 durch den Kontakt mit dem Eisenkern 10 beschädigt wird, und das Isolierpapier 20 kann eine zusätzliche Isolierung zwischen dem Leiterabschnitt 30 und dem Eisenkern 10 bereitstellen. Um sicherzustellen, dass der Leiterabschnitt 30 reibungslos in die Leiternut 10h eingeführt wird, ist die Breite der radialen Öffnung der Leiternut 10h normalerweise größer als die Breite des Leiterabschnitts 30, sodass nach dem Einführen des Leiterabschnitts 30 in die Leiternut 10h die Gefahr besteht, dass der Leiterabschnitt 30 aus der Leiternut 10h herausfällt. Ferner wird, wie in Fig. 1B gezeigt, der Nutkeil 40 an der radialen Öffnung der Leiternut 10h installiert, nachdem eine vorbestimmte Anzahl von Leiterabschnitten 30 in jeder Leiternut 10h aufgenommen und eingebaut wurde, um zu verhindern, dass die Leiterabschnitte 30 aus der Leiternut 10h herausfallen.

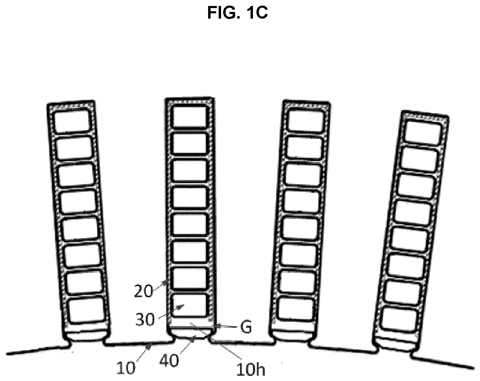

Obwohl nach dem Einbau des Nutkeils 40 erwartet wird, dass zwischen dem Nutkeil 40 und dem Isolierpapier 20 ein idealer Montagezustand, wie in Fig. 1B gezeigt, vorliegt, d. h., dass das Ende des Isolierpapiers 20 genau mit dem Nutkeil 40 in Kontakt steht, gibt es im tatsächlichen Produktionsprozess im Allgemeinen eine Toleranz in der Größe des Isolierpapiers 20. Um sicherzustellen, dass der Nutkeil 40 reibungslos in die Leiternut 10h eingeführt werden kann, ohne in Eingriff mit dem Isolierpapier 20 zu gelangen, besteht häufig ein Abstand G, wie in Fig. 1C gezeigt, zwischen dem Nutkeil 40 und dem Ende des Isolierpapiers 20. Ein solcher Abstand G führt zu einer unzureichenden Kriechstrecke, sodass die Isolationsleistung zwischen dem Eisenkern 10 und dem Leiterabschnitt 30 schlecht ist.

Die vorliegende Erfindung wird ausgehend von den oben genannten Mängeln des Standes der Technik gemacht. Eine Aufgabe der vorliegenden Erfindung besteht darin, einen Nutkeil für eine Statoranordnung bereitzustellen, der reibungslos in die Leiternut eingeführt werden kann und gleichzeitig das Problem der schlechten Isolationsleistung zwischen dem Eisenkern und dem Leiterabschnitt behebt, das durch eine unzureichende Kriechstrecke verursacht wird, wie im oben genannten Stand der Technik beschrieben. Eine weitere Aufgabe der vorliegenden Erfindung besteht darin, eine Statoranordnung bereitzustellen, die den Nutkeil umfasst.

Um die obigen Aufgaben der Erfindung zu erfüllen, werden in der vorliegenden Erfindung die folgenden technischen Lösungen verwendet.

Die vorliegende Erfindung stellt einen Nutkeil für eine Statoranordnung wie folgt bereit, der in eine Leiternut eines Eisenkerns der Statoranordnung eingebaut wird, wobei der Nutkeil in Form eines geraden Stabes ausgebildet ist und eine Längsrichtung, eine Breitenrichtung und eine Höhenrichtung aufweist, die orthogonal zueinander verlaufen, wobei der Nutkeil in der Breitenrichtung einen Mittelabschnitt und Breitenrichtungsenden umfasst, wobei das Breitenrichtungsende an einer Breitenrichtungsaußenseite des Mittelabschnitts liegt und das Breitenrichtungsende mit einer Nut ausgebildet ist, wobei die Nut an einer Seite in der Höhenrichtung offen und an der anderen Seite in der Höhenrichtung konkav ist, und wobei sich die Nut entlang der Längsrichtung geradlinig erstreckt,
wobei in einem Zustand, in dem der Nutkeil in die Leiternut eingebaut ist, der Mittelabschnitt zur Abstützung eines Leiterabschnitts in der Leiternut dient, und die Nut zur Aufnahme eines radialen Innenendes eines blattförmigen Isolators in der Leiternut dient.

In einer optionalen Lösung umfasst jede der Nuten in der Längsrichtung einen Abschnitt mit konstanter Breite und einen Abschnitt mit stetig zunehmender Breite, die miteinander verbunden sind, wobei der Abschnitt mit stetig zunehmender Breite an einer Längsrichtungsaußenseite des Abschnitts mit konstanter Breite liegt, und wobei die Breite des Abschnitts mit stetig zunehmender Breite von dem Abschnitt mit konstanter Breite zur Längsrichtungsaußenseite hin allmählich zunimmt.

In einer weiteren optionalen Lösung erstrecken sich eine Breitenrichtungsinnenwand und/oder eine Breitenrichtungsaußenwand zur Ausbildung des Abschnitts mit stetig zunehmender Breite schräg in Bezug auf die Längsrichtung.

In einer weiteren optionalen Lösung ist die Tiefe der Nut in der Höhenrichtung so ausgebildet, dass in dem Zustand, in dem der Nutkeil in die Leiternut eingebaut ist, das radiale Innenende des blattförmigen Isolators vom Boden der Nut beabstandet ist.

In einer weiteren optionalen Lösung ist das Breitenrichtungsende so ausgebildet, dass seine Höhe zur Breitenrichtungsaußenseite hin allmählich abnimmt.

In einer weiteren optionalen Lösung weist der Nutkeil in einem beliebigen Querschnitt des Nutkeils eine Form auf, die symmetrisch in Bezug auf eine Breitenrichtungsmittellinie ist, die entlang der Höhenrichtung verläuft.

Die vorliegende Anmeldung stellt auch eine Statoranordnung wie folgt bereit, die einen Nutkeil für eine Statoranordnung umfasst, der in einer der oben genannten technischen Lösungen beschrieben ist.

In einer optionalen Lösung umfasst die Statoranordnung ferner einen Eisenkern, wobei der Eisenkern mit einer Vielzahl von entlang der Radialrichtung verlaufenden Leiternuten ausgebildet ist, wobei eine Seitenwand der Leiternut mit einem Nutkeilmontageabschnitt ausgebildet ist und der Nutkeilmontageabschnitt der Form des Breitenrichtungsendes des Nutkeils entspricht,
wobei der Nutkeil in den entsprechenden Nutkeilmontageabschnitt in einer Weise eingebaut ist, dass seine Längsrichtung entlang der Axialrichtung des Eisenkerns verläuft, seine Höhenrichtung entlang der Radialrichtung des Eisenkerns verläuft und seine Breitenrichtung etwa entlang der Umfangsrichtung des Eisenkerns verläuft.

In einer weiteren optionalen Lösung umfasst die Statoranordnung ferner einen blattförmigen Isolator und einen Leiterabschnitt, wobei der blattförmige Isolator einen an der Umfangswand der Leiternut haftenden Haftungsabschnitt und ein in die Nut des Nutkeils eingefügtes radiales Innenende aufweist, wobei die Vielzahl von Leiterabschnitten entlang der Radialrichtung angeordnet in der Leiternut aufgenommen ist und vom Eisenkern durch den blattförmigen Isolator getrennt ist, und wobei der Leiterabschnitt von dem Mittelabschnitt des Nutkeils gestützt ist.

In einer weiteren optionalen Lösung umfasst der Eisenkern einen Anlageabschnitt, der sich an der radialen Öffnung der Leiternut befindet, wobei der Nutkeil in der Radialrichtung an dem Anlageabschnitt anliegt und in der Radialrichtung zwischen dem Anlageabschnitt und den Leiterabschnitten angeordnet ist.

Unter Verwendung der vorgenannten technischen Lösungen stellt die vorliegende Erfindung einen neuartigen Nutkeil für eine Statoranordnung und eine Statoranordnung mit dem Nutkeil bereit. Der Nutkeil umfasst in einer Breitenrichtung einen Mittelabschnitt und Breitenrichtungsenden, die an Breitenrichtungsaußenseiten des Mittelabschnitts liegen. Das Breitenrichtungsende ist mit einer Nut ausgebildet, wobei die Nut an einer Seite in einer Höhenrichtung offen und an der anderen Seite in der Höhenrichtung konkav ist, und wobei sich die Nut entlang einer Längsrichtung geradlinig erstreckt, insbesondere durch den Nutkeil hindurch. In einem Zustand, in dem der Nutkeil in die Leiternut des Eisenkerns eingebaut ist, dient der Mittelabschnitt zur Abstützung eines Leiterabschnitts in der Leiternut, und die Nut dient zur Aufnahme eines radialen Innenendes eines blattförmigen Isolators (z. B. Isolierpapiers) in der Leiternut.

Da ein Teil des blattförmigen Isolators in die Nut des Nutkeils eingeführt wird, kann auf diese Weise einerseits sichergestellt werden, dass der blattförmige Isolator während des Einführens des Nutkeils in die Leiternut nicht in Eingriff mit dem Nutkeil gelangt, wodurch die Kraft beim Einführen des Nutkeils verringert und ein reibungsloses Einführen des Nutkeils in die Leiternut sichergestellt wird, und andererseits kann im Vergleich zum Stand der Technik sichergestellt werden, dass eine ausreichende Kriechstrecke an der Überlappung zwischen dem blattförmigen Isolator und dem Nutkeil gebildet wird, um die Isolationsleistung zwischen dem Eisenkern und dem Leiterabschnitt zu verbessern.
Fig. 1A zeigt einen Teilzusammenbauprozess für eine Statoranordnung für einen Motor, bei dem der Leiterabschnitt in Pfeilrichtung in die Leiternut des Eisenkerns eingefügt wird.
Fig. 1B zeigt eine schematische Darstellung eines Ausschnitts einer Statoranordnung für einen Motor, die mit dem Zusammenbauprozess in Fig. 1A zusammengebaut wurde, wobei sich der Nutkeil und das Isolierpapier in einem idealen Montagezustand befinden.
Fig. 1C zeigt eine schematische Darstellung eines Ausschnitts einer Statoranordnung für einen Motor, die mit dem Zusammenbauprozess in Fig. 1A zusammengebaut wurde, wobei zwischen dem Nutkeil und dem Ende des Isolierpapiers ein Abstand besteht.
Fig. 2A zeigt eine dreidimensionale schematische Darstellung eines Nutkeils für eine Statoranordnung für einen Motor gemäß einer Ausführungsform der vorliegenden Erfindung.
Fig. 2B zeigt eine schematische Darstellung eines Ausschnitts des Aufbaus des Nutkeils in Fig. 2A, einschließlich Längsrichtungsenden.
Fig. 3A zeigt eine schematische Darstellung eines Ausschnitts des Aufbaus einer Statoranordnung für einen Motor gemäß einer Ausführungsform der vorliegenden Erfindung.
Fig. 3B zeigt eine schematische Darstellung eines Ausschnitts des Aufbaus der Statoranordnung für einen Motor in Fig. 3A, wobei in die Leiternut des Eisenkerns keine weiteren Komponenten eingebaut sind.
Fig. 3C zeigt eine schematische Aufbaudarstellung eines Ausschnitts der Statoranordnung für einen Motor in Fig. 3A, wobei das Isolierpapier bereits in die Leiternut des Eisenkerns eingebaut ist.
Fig. 3D zeigt eine schematische Darstellung eines Ausschnitts des Aufbaus der Statoranordnung für einen Motor in Fig. 3A, wobei das Isolierpapier, die Leiterabschnitte und der in Fig. 2A gezeigte Nutkeil bereits in die Leiternut des Eisenkerns eingebaut sind.
Fig. 3E zeigt eine vergrößerte schematische Darstellung des in Fig. 3D dargestellten Ausschnitts des Aufbaus.

Nachfolgend werden die spezifischen Ausführungsformen der vorliegenden Anmeldung in Verbindung mit den der Beschreibung beigefügten Zeichnungen ausführlich beschrieben. Es versteht sich von selbst, dass diese spezifischen Beschreibungen nur verwendet werden, um einen Fachmann zu lehren, wie die vorliegende Anmeldung zu implementieren ist, und nicht verwendet werden, um alle Möglichkeiten der vorliegenden Anmeldung auszuschöpfen oder den Umfang der vorliegenden Anmeldung einzuschränken.

Es sei darauf hingewiesen, dass sich in der vorliegenden Erfindung die Begriffe "Längsrichtung", "Breitenrichtung" und "Höhenrichtung", sofern nicht anders angegeben, jeweils auf die Längsrichtung, die Breitenrichtung und die Höhenrichtung des Nutkeils beziehen. Der Begriff "Breitenrichtungsaußenseite" bezieht sich auf eine Seite, die in Breitenrichtung von der in Höhen- und Längsrichtung verlaufenden Mittelebene des Nutkeils entfernt ist, d. h. die beiden Endseiten in Breitenrichtung. Der Begriff "Breitenrichtungsinnenseite" bezieht sich auf eine Seite, die in Breitenrichtung nahe an der in Höhen- und Längsrichtung verlaufenden Mittelebene des Nutkeils liegt, d. h. die Mittelseite in Breitenrichtung. Der Begriff "Längsrichtungsaußenseite" bezieht sich auf eine Seite, die in Längsrichtung von der in Höhen- und Breitenrichtung verlaufenden Mittelebene des Nutkeils entfernt ist, d. h. die beiden Endseiten in Längsrichtung. Der Begriff "Längsrichtungsinnenseite" bezieht sich auf eine Seite, die in Längsrichtung nahe an der in Höhen- und Breitenrichtung verlaufenden Mittelebene des Nutkeils liegt, d. h. die Mittelseite in Längsrichtung. Die Begriffe "Axialrichtung", "Radialrichtung" und "Umfangsrichtung" beziehen sich jeweils auf die Axialrichtung, die Radialrichtung und die Umfangsrichtung der Statoranordnung (des Eisenkerns) für einen Motor.

Nachfolgend ist der Aufbau des Nutkeils für eine Statoranordnung gemäß einer Ausführungsform der vorliegenden Erfindung in Verbindung mit den Zeichnungen dargestellt.

### (Aufbau des Nutkeils)

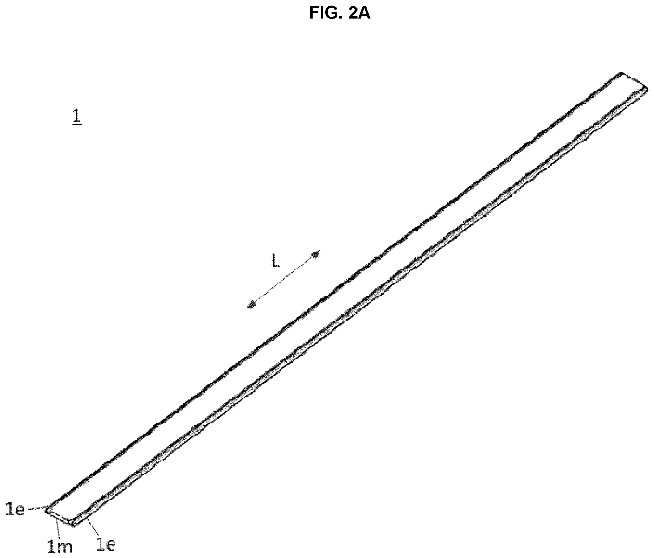

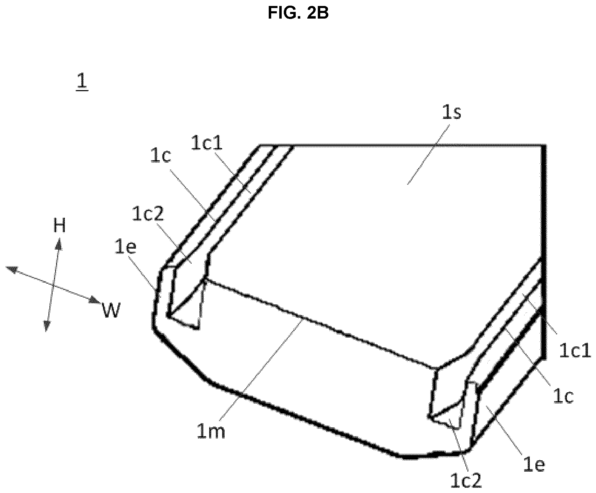

Wie in Fig. 2A und Fig. 2B gezeigt, wird ein Nutkeil 1 für eine Statoranordnung gemäß einer Ausführungsform der vorliegenden Erfindung zum Einbau in eine Leiternut 2h eines Eisenkerns 2 der Statoranordnung verwendet. Der Nutkeil 1 ist in Form eines geraden Stabes ausgebildet und weist eine Längsrichtung L, eine Breitenrichtung W und eine Höhenrichtung H auf, die orthogonal zueinander verlaufen. Bei dieser Ausführungsform weist der Nutkeil 1 in einem beliebigen Querschnitt des Nutkeils 1 eine Form auf, die symmetrisch in Bezug auf eine Breitenrichtungsmittellinie ist, die entlang der Höhenrichtung H verläuft. Das heißt, der Nutkeil 1 weist einen Aufbau auf, der in Bezug auf seine entlang der Höhenrichtung H und der Längsrichtung L verlaufende Mittelebene spiegelsymmetrisch ist. Ferner ist die Außenkontur des Nutkeils 1 in der gesamten Längsrichtung L gleich. Der Nutkeil 1 umfasst in der Breitenrichtung Weinen Mittelabschnitt 1m und zwei Breitenrichtungsenden 1e, die an Breitenrichtungsaußenseiten des Mittelabschnitts 1m liegen.

Bei dieser Ausführungsform ist, wie in Fig. 2A und Fig. 2B gezeigt, die Oberfläche des Mittelabschnitts 1m an einer Seite in der Höhenrichtung als ebene Auflagefläche 1s ausgebildet. In einem Zustand, in dem der Nutkeil 1 in einen folgenden Nutkeilmontageabschnitt 212 der Leiternut 2h eingefügt wird, liegt die Auflagefläche 1s des Mittelabschnitts 1m einem Leiterabschnitt 4 in der Leiternut 2h gegenüber und dient zur Abstützung des Leiterabschnitts 4.

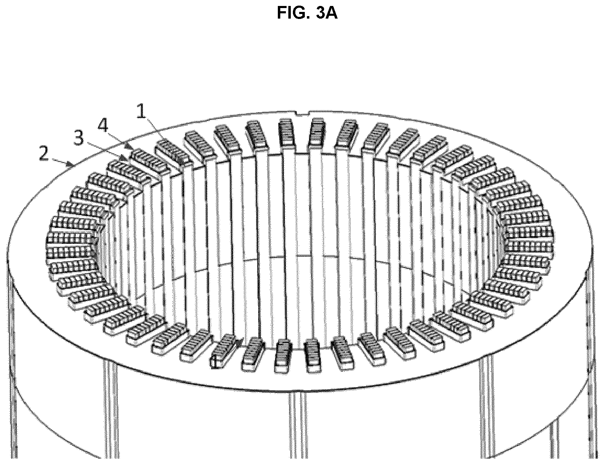

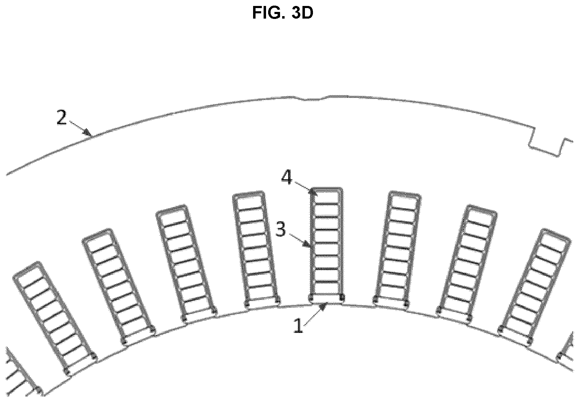

Bei dieser Ausführungsform ist, wie in Fig. 2A und Fig. 2B gezeigt, das Breitenrichtungsende 1e so ausgebildet, dass seine Höhe ausgehend vom Mittelabschnitt 1m zur Breitenrichtungsaußenseite hin allmählich abnimmt. Jedes der Breitenrichtungsenden 1e ist mit einer Nut 1c ausgebildet. Die Nut 1c ist an einer Seite in der Höhenrichtung offen und an der anderen Seite in der Höhenrichtung konkav. Die Nut 1c erstreckt sich geradlinig entlang der Längsrichtung L, insbesondere durch den Nutkeil 1 hindurch. Die Nut 1c erstreckt sich über eine vorbestimmte Tiefe entlang der Höhenrichtung H, sodass in dem Zustand, in dem der Nutkeil 1 in die Leiternut 2h eingefügt ist, das radiale Innenende 32 des Isolierpapiers 3 vom Boden der Nut 1c beabstandet ist. Auf diese Weise kann beim Einfügen des Nutkeils 1 in die Leiternut 2h der Nutkeil 1 nicht in Eingriff mit dem Isolierpapier 3 gelangen. Wie in Fig. 3A und Fig. 3D dargestellt, dient die Nut 1c dadurch zur Aufnahme des radialen Innenendes 32 des Isolierpapiers 3 in der Leiternut 2h im Rahmen des Einfügens des Nutkeils 1 in die Leiternut 2h und nach dem anschließenden Einfügen des Nutkeils in Position.

Jede der Nuten 1c umfasst in der Längsrichtung L einen Abschnitt 1 c1 mit konstanter Breite und einen Abschnitt 1c2 mit stetig zunehmender Breite, die miteinander verbunden sind. Der Abschnitt 1c1 mit konstanter Breite ist in der Längsrichtung L immer gleich breit. Der Abschnitt 1c2 mit stetig zunehmender Breite liegt an einer Längsrichtungsaußenseite des Abschnitts 1c1 mit konstanter Breite. Die Breite des Abschnitts 1c2 mit stetig zunehmender Breite nimmt von dem Abschnitt 1c1 mit konstanter Breite zur Längsrichtungsaußenseite hin allmählich zu. Insbesondere erstreckt sich eine Breitenrichtungsinnenwand zur Ausbildung des Abschnitts 1c2 mit stetig zunehmender Breite schräg in Bezug auf die Längsrichtung mit einem großen Neigungswinkel. Eine Breitenrichtungsaußenwand zur Ausbildung des Abschnitts 1c2 mit stetig zunehmender Breite erstreckt sich schräg in Bezug auf die Längsrichtung L mit einem kleinen Neigungswinkel. Dadurch wird ermöglicht, dass der Abschnitt 1c2 mit stetig zunehmender Breite eine Form mit allmählich zunehmender Breite aufweist. In einer Anfangsphase, in der der Nutkeil 1 in die Leiternut 2h eingefügt wird, kann der Abschnitt 1c2 mit stetig zunehmender Breite die Funktion erfüllen, das radiale Innenende 32 des Isolierpapiers 3 reibungslos zu dem Abschnitt 1c1 mit konstanter Breite zu führen.

Nachfolgend wird der Aufbau einer Statoranordnung für einen Motor beschrieben, die den obigen Nutkeil 1 umfasst.

### (Aufbau der Statoranordnung für einen Motor)

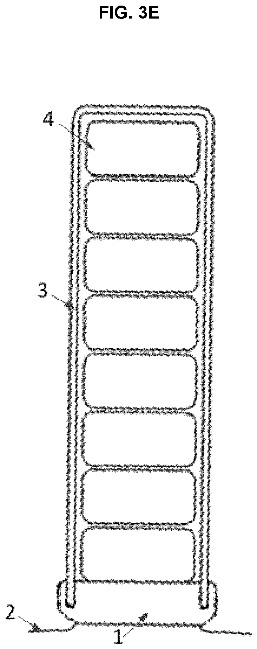

Wie in Fig. 3A, Fig. 3D und Fig. 3E gezeigt, umfasst eine Statoranordnung für einen Motor gemäß einer Ausführungsform der vorliegenden Erfindung einen oben genannten Nutkeil 1, einen Eisenkern 2, ein Isolierpapier 3 und Leiterabschnitte 4.

Insbesondere umfasst der Aufbau des Eisenkerns 2 bei dieser Ausführungsform, wie in Fig. 3A bis Fig. 3D gezeigt, einen zylindrischen Eisenkernkörper und eine Vielzahl von Zahnabschnitten 21 des Eisenkerns, die aus dem Eisenkernkörper zur radialen Innenseite hin ragt. Die einzelnen Zahnabschnitte 21 des Eisenkerns weisen die gleiche Form und Größe auf. In der Umfangsrichtung ist zwischen jeweils zwei benachbarten Zahnabschnitten 21 des Eisenkerns eine entlang der Radialrichtung verlaufende Leiternut 2h ausgebildet. Da die Vielzahl von Zahnabschnitten 21 des Eisenkerns gleichmäßig in der Umfangsrichtung verteilt ist, ist auch die Vielzahl von Leiternuten 2h gleichmäßig in der Umfangsrichtung verteilt.

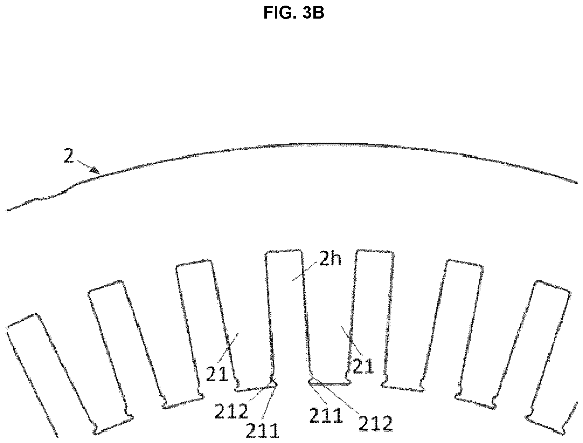

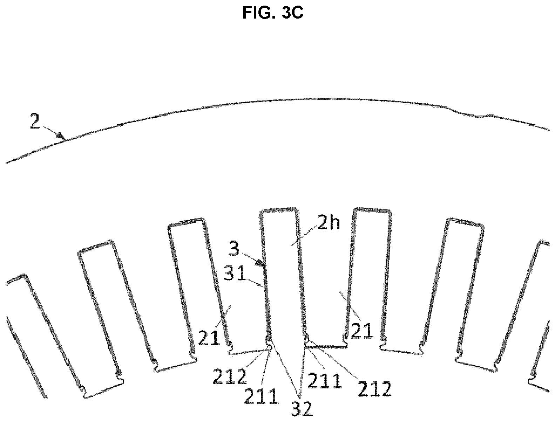

Wie in Fig. 3B bis Fig. 3E gezeigt, ist der an der radialen Öffnung der Leiternut 2h befindliche Abschnitt jedes Zahnabschnitts 21 des Eisenkerns zusätzlich schwalbenschwanzförmig ausgebildet. Dadurch wird durch die Schwalbenschwanzform der benachbarten Zahnabschnitte 21 des Eisenkerns ein Anlageabschnitt 211 zur entsprechenden Anlage am Nutkeil 1 gebildet. Der Zahnabschnitt 21 des Eisenkerns bildet eine Seitenwand der Leiternut 2h. Ein Abschnitt der Seitenwand der Leiternut 2h nahe an der radialen Öffnung bildet einen Nutkeilmontageabschnitt 212. Die Breite des Nutkeilmontageabschnitts 212 in der Umfangsrichtung ist größer als die Breite der anderen Abschnitte der Leiternut 2h in der Umfangsrichtung. Die Querschnittskonturform des Nutkeilmontageabschnitts 212 entspricht der Außenkonturform des Breitenrichtungsendes 1e des Nutkeils 1. Nachdem das Isolierpapier 3, wie in Fig. 3C gezeigt, in Position gebracht wurde, wird das radiale Innenende 32 des Isolierpapiers 3 an dem Nutkeilmontageabschnitt 212 positioniert. Auf diese Weise können einerseits die beiden radialen Innenenden 32 des Isolierpapiers 3 in der Umfangsrichtung voneinander entfernt werden, sodass die radialen Innenenden 32 des Isolierpapiers 3 bei der Einfügung des Leiterabschnitts 4 durch die radiale Öffnung der Leiternut 2h in die Leiternut 2h nicht aufgerollt werden. Andererseits ist es zweckmäßig, dass die radialen Innenenden 32 des Isolierpapiers 3 in die Nut 1c des Nutkeils 1 eingelegt werden, sodass der Nutkeil 1 entlang der Axialrichtung am Nutkeilmontageabschnitt 212 reibungslos in die Leiternut 2h eingefügt wird.

Bei dieser Ausführungsform umfasst das Isolierpapier 3, wie in Fig. 3C gezeigt, einen Haftungsabschnitt 31, der an der Leiternut 2h derart befestigt ist, dass er an der Umfangswand der Leiternut 2h haftet, und radiale Innenenden 32, die sich in den Nutkeilmontageabschnitt 212 erstrecken. Wie in Fig. 3A, Fig. 3D und Fig. 3E gezeigt, sind die Vielzahl von Leiterabschnitten 4 und der Eisenkern 2 durch den Haftungsabschnitt 31 des Isolierpapiers 3 voneinander getrennt. Der Haftungsabschnitt 31 des Isolierpapiers 3 dient als zusätzliche Isolierung zwischen den Leiterabschnitten 4 und dem Eisenkern 2. Die radialen Innenenden 32 des Isolierpapiers 3 sind von der Seitenwand der Leiternut 2h getrennt und reichen in die Nut 1c des Nutkeils 1 hinein, sodass die durch die Überlappung zwischen dem Isolierpapier 3 und dem Nutkeil 1 gebildete Kriechstrecke wirksam verlängert wird. Weiterhin ist zwischen den radialen Innenenden des Isolierpapiers 3 und dem Boden der Nut 1c des Nutkeils 1 ein vorbestimmter Spalt ausgebildet, sodass der Nutkeil 1 bei der Einfügung in die Leiternut 2h nicht in Eingriff mit dem Isolierpapier 3 gelangt und somit eine reibungslose Einfügung des Nutkeils 1 gewährleistet wird.

Bei dieser Ausführungsform kann der Leiterabschnitt 4, wie in Fig. 3A, Fig. 3D und Fig. 3E gezeigt, eine Wellenwicklung sein. Die Vielzahl von Leiterabschnitten 4 ist entlang der Radialrichtung angeordnet in der Leiternut 2h aufgenommen und vom Eisenkern 2 durch den Haftungsabschnitt 32 des Isolierpapiers 3 getrennt. Unter Ausnutzung des durch die Wechselwirkung zwischen den Leiterabschnitten 4 erzeugten Drucks auf den Nutkeil 1 ist der Nutkeil 1 in der Radialrichtung zwischen den Leiterabschnitten 4 und dem Anlageabschnitt 211 derart angeordnet, dass die Breitenrichtungsenden 1e des Nutkeils 1 an dem Anlageabschnitt 211 des Eisenkerns 2 anliegen, um ein Herausfallen der Leiterabschnitte 4 aus der Leiternut 2h zu verhindern.

Im Folgenden wird der Zusammenbauprozess der Statoranordnung beschrieben, der in etwa die folgenden Schritte umfasst:
Wie in Fig. 3C gezeigt, wird das Isolierpapier 3 in der Leiternut 2h des Eisenkerns 2 aufgenommen und eingebaut;
wie in Fig. 3D und Fig. 3E gezeigt, wird die Vielzahl von Leiterabschnitten 4 nacheinander von der radialen Innenseite durch die radiale Öffnung der Leiternut 2h in die Leiternut 2h eingefügt, sodass die Vielzahl von Leiterabschnitten 4 entlang der Radialrichtung angeordnet ist; und
der Nutkeil 1 wird entlang der Axialrichtung an einer radial inneren Position des radial innersten Leiterabschnitts 4 eingefügt. Dadurch wird der Nutkeil 1 in einem Zustand, in dem die radialen Innenenden 32 des Isolierpapiers 3 in die Nut 1c des Nutkeils 1 eingefügt sind, in den entsprechenden Nutkeilmontageabschnitt 212 der Leiternut 2h in einer Weise eingebaut, dass seine Längsrichtung L entlang der Axialrichtung des Eisenkerns 2 verläuft, seine Höhenrichtung H entlang der Radialrichtung des Eisenkerns 2 verläuft und seine Breitenrichtung W etwa entlang der Umfangsrichtung des Eisenkerns 2 verläuft, und an dem Anlageabschnitt 211 anliegt. Der Mittelabschnitt 1m des Nutkeils 1 liegt dem radial innersten Leiterabschnitt 4 gegenüber. Nach der Einfügung des Nutkeils 1 in Position dient die Auflagefläche 1s des Mittelabschnitts 1m zur Abstützung des Leiterabschnitts 4.

Selbstverständlich ist die vorliegende Erfindung nicht auf die in den obigen Ausführungsformen beschriebenen Lösungen beschränkt. Der Fachmann kann gemäß den Lehren der vorliegenden Erfindung verschiedene Modifikationen an den obigen Ausführungsformen der vorliegenden Erfindung vornehmen, ohne vom Umfang der vorliegenden Erfindung abzuweichen. Im Folgenden werden ergänzende Erläuterungen gegeben.
i. Bei dem in Fig. 1A bis Fig. 1C gezeigten Aufbau der Statoranordnung kann nicht nur ein Abstand G zwischen dem Nutkeil 40 und dem Ende des Isolierpapiers 20 vorhanden sein, sondern der Nutkeil 40 könnte auch übermäßig in Eingriff mit dem Isolierpapier 20 gelangen, sodass der Nutkeil 40 nicht reibungslos in die Leiternut 10h eingefügt werden kann, was für eine Serienfertigung nicht förderlich ist.
   Im Gegensatz dazu werden die radialen Innenenden 32 des Isolierpapiers 3 in die Nut 1c eingefügt und vom Boden der Nut 1c beabstandet, da der Nutkeil 1 gemäß einer Ausführungsform der vorliegenden Erfindung die Nut 1c aufweist. Hierdurch wird weitestgehend vermieden, dass der Nutkeil 1 beim Einlegen in die Leiternut 2h entlang der Axialrichtung übermäßig in Eingriff mit dem Isolierpapier 3 gelangt. Damit wird sichergestellt, dass der Nutkeil 1 reibungslos in die Leiternut 2h eingefügt wird, was der Serienfertigung zugute kommt.
ii. Obwohl in den obigen Ausführungsformen das Isolierpapier 3 am Beispiel eines blattförmigen Isolators erläutert wird, ist die vorliegende Erfindung nicht darauf beschränkt. Ein blattförmiger Isolator in anderer Form kann als zusätzliche Isolierung zwischen den Leiterabschnitten 4 und dem Eisenkern 2 verwendet werden.
iii. Es versteht sich, dass der Nutkeil 1 aus einem Isoliermaterial gebildet werden kann, wobei die Art des Isoliermaterials je nach Bedarf geändert werden kann. Ferner kann durch die Verwendung von geeignetem Material und der durch den Nutkeil 1 gebildeten Nut 1c dem Nutkeil 1 eine gewisse Elastizität verliehen werden. Dadurch wird beim Einschieben des Nutkeils 1 in die Leiternut 2h verhindert, dass der Nutkeil 1 mit dem Eisenkern 2 kollidiert und beschädigt wird.
iv. Nachdem der Nutkeil 1 in den Nutkeilmontageabschnitt 212 der Leiternut 2h eingefügt und eingebaut wurde, liegt der Nutkeil 1 durch die Kraft der Leiterabschnitte 4 an dem Anlageabschnitt 211 an. Dadurch erfährt der Nutkeil 1 keine unerwünschte Verrückung, und damit wird die NVH-Leistung der gesamten Statoranordnung gewährleistet.
v. Obwohl in den obigen Ausführungsformen angegeben wird, dass die Leiternut 2h eine radiale Öffnung aufweist, die zur radialen Innenseite hin offen ist, ist die vorliegende Erfindung nicht darauf beschränkt. Die Leiternut 2h kann keine radiale Öffnung bilden, die zur radialen Innenseite hin offen ist, und kann stattdessen eine radiale Öffnung bilden, die zur radialen Außenseite hin offen ist. Mit anderen Worten ist die Leiternut nicht am Innenumfang des Eisenkerns, sondern am Außenumfang des Eisenkerns ausgebildet.

### Liste der Bezugszeichen

- 10: Eisenkern
- 10h: Leiternut
- 20: Isolierpapier
- 30: Leiterabschnitt
- 40: Nutkeil
- G: Abstand
- 1: Nutkeil
- 1m: Mittelabschnitt
- 1s: Auflagefläche
- 1e: Breitenrichtungsende
- 1c: Nut
- 1c1: Abschnitt mit konstanter Breite
- 1c2: Abschnitt mit stetig zunehmender Breite
- 2: Eisenkern
- 2h: Leiternut
- 21: Zahnabschnitt des Eisenkerns
- 211: Anlageabschnitt
- 212: Nutkeilmontageabschnitt
- 3: Isolierpapier
- 31: Haftungsabschnitt
- 32: radiales Innenende
- 4: Leiterabschnitt
- L: Längsrichtung
- W: Breitenrichtung
- H: Höhenrichtung

## Patentansprüche

1. Nutkeil für eine Statoranordnung, der zum Einbau in eine Leiternut (2h) eines Eisenkerns (2) der Statoranordnung dient, wobei der Nutkeil (1) in Form eines geraden Stabes ausgebildet ist und eine Längsrichtung (L), eine Breitenrichtung (W) und eine Höhenrichtung (H) aufweist, die orthogonal zueinander verlaufen,
wobei der Nutkeil (1) in der Breitenrichtung (W) einen Mittelabschnitt (1m) und Breitenrichtungsenden (1e) umfasst, wobei das Breitenrichtungsende (1e) an einer Breitenrichtungsaußenseite des Mittelabschnitts (1m) liegt und das Breitenrichtungsende (1e) mit einer Nut (1c) ausgebildet ist, wobei die Nut (1c) an einer Seite in der Höhenrichtung offen und an der anderen Seite in der Höhenrichtung konkav ist, und wobei sich die Nut (1c) entlang der Längsrichtung (L) geradlinig erstreckt, und
wobei in einem Zustand, in dem der Nutkeil (1) in die Leiternut (2h) eingebaut ist, der Mittelabschnitt (1m) zur Abstützung eines Leiterabschnitts (4) in der Leiternut (2h) dient, und die Nut (1c) zur Aufnahme eines radialen Innenendes (32) eines blattförmigen Isolators in der Leiternut (2h) dient.

2. Nutkeil für eine Statoranordnung nach Anspruch 1,
**dadurch gekennzeichnet, dass** jede der Nuten (1c) in der Längsrichtung (L) einen Abschnitt (1c1) mit konstanter Breite und einen Abschnitt (1c2) mit stetig zunehmender Breite umfasst, die miteinander verbunden sind, wobei der Abschnitt (1c2) mit stetig zunehmender Breite an einer Längsrichtungsaußenseite des Abschnitts (1c1) mit konstanter Breite liegt, und wobei die Breite des Abschnitts (1c2) mit stetig zunehmender Breite von dem Abschnitt (1c1) mit konstanter Breite zur Längsrichtungsaußenseite hin allmählich zunimmt.

3. Nutkeil für eine Statoranordnung nach Anspruch 2,
**dadurch gekennzeichnet, dass** sich eine Breitenrichtungsinnenwand und/oder eine Breitenrichtungsaußenwand zur Ausbildung des Abschnitts (1c2) mit stetig zunehmender Breite schräg in Bezug auf die Längsrichtung (L) erstrecken.

4. Nutkeil für eine Statoranordnung nach Anspruch 2 oder 3,
**dadurch gekennzeichnet, dass** die Tiefe der Nut (1c) in der Höhenrichtung (H) so ausgebildet ist, dass in dem Zustand, in dem der Nutkeil (1) in die Leiternut (2h) eingebaut ist, das radiale Innenende (32) des blattförmigen Isolators vom Boden der Nut (1c) beabstandet ist.

5. Nutkeil für eine Statoranordnung nach einem der Ansprüche 1 bis 4,
**dadurch gekennzeichnet, dass** das Breitenrichtungsende (1e) so ausgebildet ist, dass seine Höhe zur Breitenrichtungsaußenseite hin allmählich abnimmt.

6. Nutkeil für eine Statoranordnung nach einem der Ansprüche 1 bis 5,
**dadurch gekennzeichnet, dass** der Nutkeil (1) in einem beliebigen Querschnitt des Nutkeils (1) eine Form aufweist, die symmetrisch in Bezug auf eine Breitenrichtungsmittellinie ist, die entlang der Höhenrichtung (H) verläuft.

7. Statoranordnung mit einem Nutkeil (1) für eine Statoranordnung nach einem der Ansprüche 1 bis 6.

8. Statoranordnung nach Anspruch 7,
**dadurch gekennzeichnet, dass** die Statoranordnung ferner einen Eisenkern (2) umfasst, wobei der Eisenkern (2) mit einer Vielzahl von entlang der Radialrichtung verlaufenden Leiternuten (2h) ausgebildet ist, wobei eine Seitenwand der Leiternut (2h) mit einem Nutkeilmontageabschnitt (212) ausgebildet ist und der Nutkeilmontageabschnitt (212) der Form des Breitenrichtungsendes (1e) des Nutkeils (1) entspricht,
dass der Nutkeil (1) in den entsprechenden Nutkeilmontageabschnitt (212) derart eingebaut ist, dass seine Längsrichtung (L) entlang der Axialrichtung des Eisenkerns (2) verläuft, seine Höhenrichtung (H) entlang der Radialrichtung des Eisenkerns (2) verläuft und seine Breitenrichtung (W) etwa entlang der Umfangsrichtung des Eisenkerns (2) verläuft.

9. Statoranordnung nach Anspruch 8,
**dadurch gekennzeichnet, dass** die Statoranordnung ferner einen blattförmigen Isolator und einen Leiterabschnitt (4) umfasst, wobei der blattförmige Isolator einen an der Umfangswand der Leiternut (2h) haftenden Haftungsabschnitt (31) und ein in die Nut (1c) des Nutkeils (1) eingefügtes radiales Innenende (32) aufweist, wobei eine Vielzahl von Leiterabschnitten (4) entlang der Radialrichtung angeordnet in der Leiternut (2h) aufgenommen ist und vom Eisenkern (2) durch den blattförmigen Isolator (3) getrennt ist, und wobei der Leiterabschnitt (4) von dem Mittelabschnitt (1m) des Nutkeils (1) gestützt ist.

10. Statoranordnung nach Anspruch 9,
**dadurch gekennzeichnet, dass** der Eisenkern (2) einen Anlageabschnitt (211) umfasst, der sich an der radialen Öffnung der Leiternut (2h) befindet, wobei der Nutkeil (1) in der Radialrichtung an dem Anlageabschnitt (211) anliegt und in der Radialrichtung zwischen dem Anlageabschnitt (211) und den Leiterabschnitten (4) angeordnet ist.
